# EUROPEAN PATENT SPECIFICATION

(11) **EP 3 551 878 B1**
(45) Date of publication and mention of the grant of the patent: **10.11.2021**
(21) Application number: 17811842.8
(22) Date of filing: 05.12.2017
(51) Int. Cl.: F03D 1/06

(54) **A WIND TURBINE BLADE HAVING A TRUNCATED TRAILING EDGE**
ROTORBLATT EINER WINDTURBINE MIT ABGESCHNITTENER HINTERKANTE
UNE PALE D'ÉOLIENNE AYANT UN BORD DE FUITE TRONQUÉ

(30) Priority: 06.12.2016 US 201662430404 P; 22.12.2016 DK PA201671032
(43) Date of publication of application: 16.10.2019
(73) Proprietor: Vestas Wind Systems A/S, 8200 Aarhus N (DK)
(72) Inventor: GUPTA, Anurag, Manvel, Texas 77578 (US)
(74) Representative: Vestas Patents Department
(86) International application number: PCT/DK2017/050408
(87) International publication number: WO 2018/103803

(56) References cited:
- EP-A1- 2 806 156
- EP-A1- 2 921 697
- GB-A- 2 497 739
- US-A1- 2016 177 922

## Description

### Background

The present invention relates to reducing fluid flow induced forces produced by vortex shedding on a wind turbine rotor blade. In particular, the present invention reduces vortex shedding on a wind turbine rotor blade through the design of a trailing edge shape of the blade.

Modern wind turbine blades are long and slender and may be susceptible to aeroelastic stability issues. This is because the long slender blades may have insufficient aerodynamic damping and unsteady loading at high angles of attack. This unsteady loading may lead to edgewise vibrations which are vibrations parallel to the chord of the rotor blade. Such edgewise vibrations may be problematic when the wind turbine is at standstill and the rotor blades are braked (mechanically or aerodynamically) or are idling slowly.

One cause of the initial disturbances which lead to edgewise vibrations at wind turbine standstill is vortex shedding. If a wind turbine rotor blade is not positioned correctly toward the oncoming flow, the blade will present a bluff body to the oncoming flow. When such a bluff body is subjected to the oncoming wind flow, the flow may separate from the blade giving rise to periodic vortex shedding form either side of the blade. This periodic vortex shedding causes fluctuating pressure forces on the surfaces of the blade which may then result in the blade experiencing edgewise vibrations. Wind turbine rotor blades are typically slender flexible members and if the frequency of the vortex shedding happens to be close to one of the eigen frequencies of the blade, this may lead to forces which may damage the blade.

US2016/177922 describes a blade having a flatback trailing edge with air jets for reducing vortex shedding. EP2806156 describes a noise reduction device for wind turbine blades with thick trailing edges. GB2497739 describes a rotor blade with a serrated trailing edge, having a periodic variation. EP2921697 describes a wind turbine blade which has a trailing edge with a waveform profile.

It is an aim of the present invention to reduce fluid flow induced forces produced by vortex shedding on a wind turbine rotor blade that may lead to edgewise vibrations.

### Summary of Invention

According to the present invention there is provided a wind turbine blade in accordance with claim 1.

Preferably the pressure surface aft corner and the suction surface aft corner comprise a sharp corner.

Preferably the trailing edge surface is convex in cross section.

The plurality of channels may comprise a plurality of flutes on the trailing edge surface extending between the pressure surface and the suction surface.

Preferably the plurality of flutes extends substantially parallel to a thickness direction between the pressure surface and the suction surface.

A chord length may be defined between a leading edge and the trailing edge surface, and the chord length undulates in the spanwise direction.

Preferably the pressure surface aft corner and the suction surface aft corner have an undulating profile in the spanwise direction.

The plurality of channels may further comprise a plurality of internal ducts in the vicinity of the truncated trailing edge; the ducts extending from the pressure surface to the suction surface in the vicinity of the truncated trailing edge; or the ducts extending from one of the pressure surface or the suction surface to the trailing edge surface.

Preferably, the blade comprises: a main blade portion having a leading edge and the pressure surface and the suction surface; and a separate trailing edge add-on component, the trailing edge add-on component comprising the trailing edge surface and the plurality of channels; wherein the trailing edge add-on component is connected to the main blade portion.

### Brief Description of the Drawings

Examples of the invention will now be described in detail with reference to the following figures, in which:
Figure 1 shows a view of a wind turbine;
Figure 2 shows a perspective view of a wind turbine rotor blade;
Figures 3a and 3b show an airfoil profile at a low angle of attack;
Figures 4a and 4b show an airfoil profile at a high angle of attack;
Figures 5a to 5c show views of a section of the blade according to the invention;
Figures 6a and 6b show cross-sectional views at the trailing edge of the blade;
Figure 7 is a perspective view of the trailing of the blade;
Figures 8a to 8c show airflow over airfoil profiles;
Figure 9 shows a cross-sectional view at the trailing edge of the blade;
Figures 10a and 10b show airfoil profiles of the blade.

### Detailed description of the invention

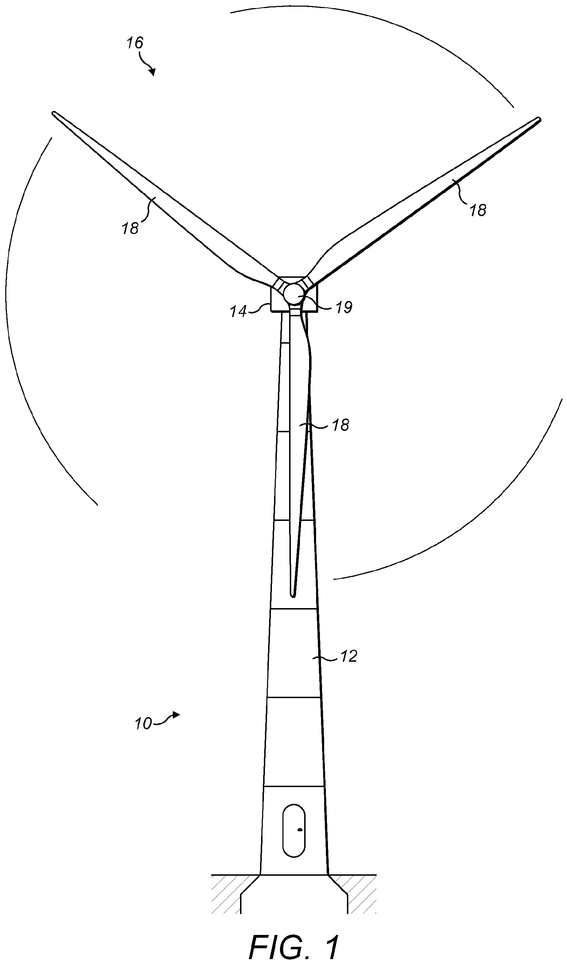

Referring to Figure 1, this shows a horizontal axis wind turbine 10. The wind turbine 10 comprises a tower 12 supporting a nacelle 14 at an upper end of the tower 12. A rotor 16 is mounted to the nacelle 14. The rotor 16 comprises a hub 19 and three wind turbine blades 18 are mounted to the hub 19. The three blades 18 are equally spaced about the periphery of the hub 19 and extend in a longitudinal direction from a root end, which is mounted to the hub 18, towards a tip end.

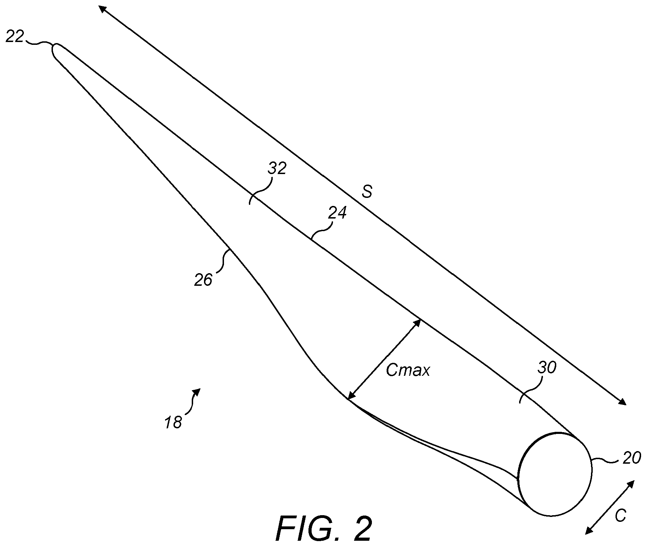

Referring to Figure 2, this shows one of the wind turbine blades 18 in more detail. Here it can be seen that a root end 20 of the blade 18 is generally circular. Moving in a spanwise direction S from the root end 20 towards a tip end 22 of the blade 18, it can be seen that the width (i.e. chord C) of the blade 18 rapidly increases up to a maximum width (i.e. maximum chord, as indicated by the line CMAX in Figure 2). The width of the blade 18 then steadily decreases moving towards the tip of the blade 22. The blade 18 extends in a chordwise direction C between a leading edge 24 and a trailing edge 26.

The part of the blade 18 between the root end 20 of the blade and the maximum chord CMAX is referred to herein as the 'transition portion' 30 of the blade 18. The transition portion 30 of the blade has a cross-sectional profile that transitions from a circular profile at the root end 20 of the blade into an aerodynamically-optimised airfoil profile at maximum chord CMAX, as will be readily apparent to persons skilled in the art. The region of the blade 18 between the maximum chord CMAX and the tip 22 of the blade is referred to herein as the 'outer portion' 32 of the blade. This portion 32 of the blade 18 has an airfoil profile of varying geometry along its length.

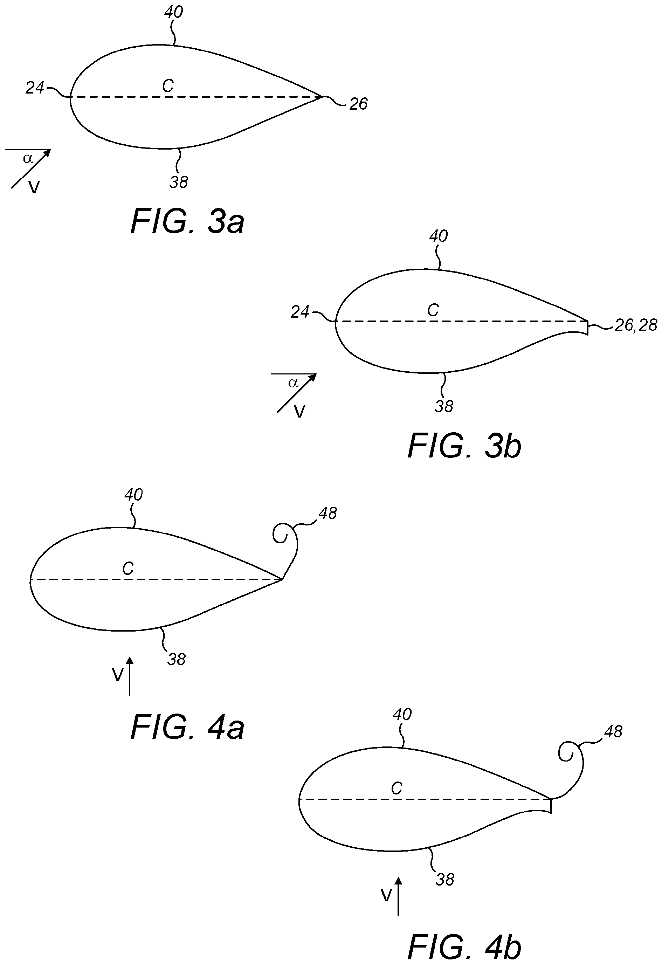

Figures 3a and 3b show cross-sectional views through a conventional blade at a point in the transition portion 30. The cross-sections are taken parallel to the chord line and show the airfoil profile of the blade. In both examples, the blade 18 comprises a pressure surface 38 and a suction surface 40, which are made primarily from glass-fibre reinforced plastic (GFRP). The pressure surface 38 and the suction surface 40 meet at the leading edge 24 of the blade 18, which has a convex-curved shape. The airfoil has a thickness between the pressure surface 38 and the suction surface 40. By "thickness" is meant the distance between the suction surface and the pressure surface measured perpendicular to the chord line.

In Figure 3a, the blade has a pointed trailing edge 26 at the location where the pressure surface 38 and the suction surface 40 meet at the aft side of the airfoil.

In Figure 3b, the blade is similar to that of Figure 3a but it does not have a pointed trailing edge and instead the blade has a blunt trailing edge 26, where the rear of the airfoil is truncated. As is known in the art, this is called a flatback trailing edge. Here, the pressure and suction surfaces 38, 40 are joined by a flat trailing edge surface 28 of the blade 18. The trailing edge surface 28 in this section is substantially perpendicular to the chord line C of the blade 20, which joins the leading and trailing edges 24, 26 of the blade 20. For an airfoil with a blunt trailing edge, the chord is defined between the leading edge and the middle of the trailing edge surface 28. The flatback trailing edge may be formed by the addition of a faired Gurney flap appended to the pressure side of the blade.

As shown in Figures 3a and 3b, the oncoming wind for the airfoil profile is shown as V (which is a resultant of the wind speed and the rotational speed of the rotor) and this is at an angle of attack α to the chord line C. As is well known in the art, at normal operation of the wind turbine the angle of attack is low and is below a stall angle.

However, as shown in Figures 4a and 4b, high angles of attack may occur. In the examples illustrated, the oncoming wind is at an angle of attack of 90 degrees to the chord line C. This may occur when the wind turbine is non-operational and the blade cannot be pitched into the wind to feather and reduce the loads on the blades. At this high angle of attack, vortex shedding may occur from the trailing edge 26 of the blade 18. The vortex shedding is illustrated schematically by the lines 48. In both Figures 4a and 4b, the trailing edge has sharp corners and these sharp corners lead to the development of vortex shedding which can result in vortex induced vibrations and edgewise vibrations of the entire blade. The vortex induced vibrations are generally more severe for blades with high lift flatback trailing edges such as those illustrated in Figure 4b than those with a pointed trailing edge illustrated in Figure 4a. In addition, the vortex induced vibrations may occur in a post stall region, that is when the angle of attack at an airfoil is greater than the stall angle of the airfoil.

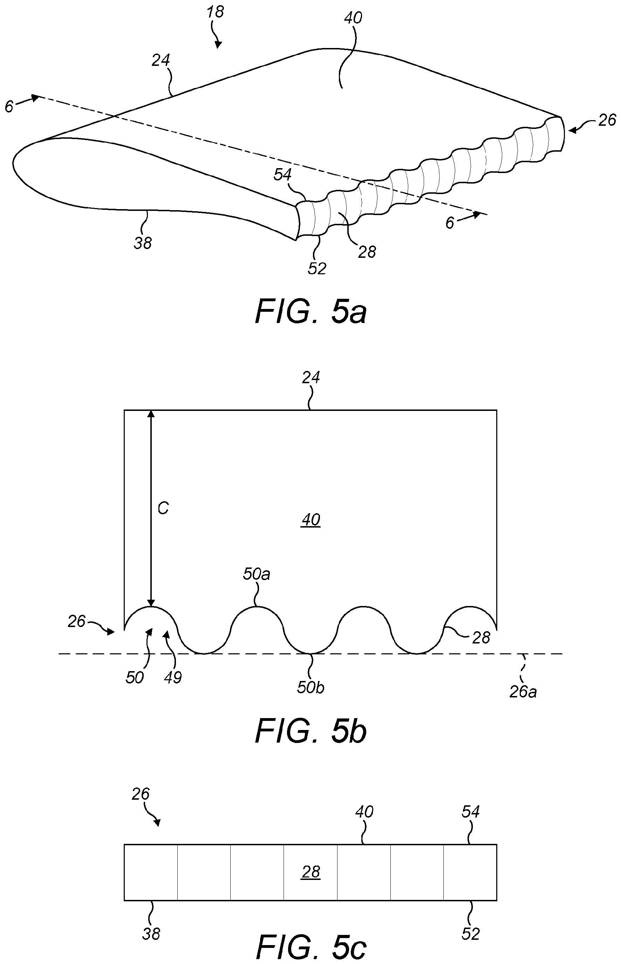

Figures 5a, 5b and 5c show a section of the wind turbine blade 18 according to the invention. Figure 5a is a perspective view of a spanwise section of the blade. Figure 5b is a plan view onto the suction surface 40 of the blade. Figure 5c is an end view of the trailing edge looking from behind the blade toward the leading edge 24. The trailing edge 26 of the blade 18 comprises a blunt trailing edge with a trailing edge surface 28.

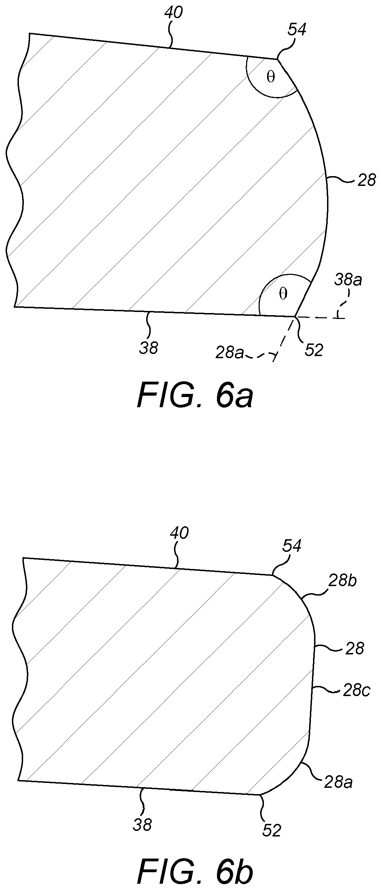

Referring now to Figure 6a, this shows the aft section of the blade 18 in cross section through the line 6-6 in Figure 5a. As can be seen the trailing edge surface 28 is not flat in this cross sectional plane, but is instead curved. In particular, when viewed from outside the airfoil profile, the trailing edge surface 28 is convex, i.e. it curves outwards in a direction away from the leading edge. When the trailing edge surface 28 is referred to as "curved" this means it is curved in a cross-sectional plane parallel to the chord as shown in Figure 6a. It should be noted that the trailing edge surface 28 may also have curvature in a spanwise direction along the length of the blade.

The trailing edge surface 28 meets the pressure surface 38 at a pressure surface aft corner 52; and the trailing edge surface 28 meets the suction surface 40 at a suction surface aft corner 54. The trailing edge surface 28 has a radius of curvature; and the radius of curvature may be equal to or greater than 25% of the trailing edge thickness, that is the distance between the pressure surface aft corner 52 and the suction surface aft corner 54. The radius of curvature may be lower that the thickness of the airfoil. The radius of curvature is specifically chosen to create a Coanda effect, where the flow can wrap around the trailing edge surface 28.

The pressure surface aft corner 52 and the suction surface aft corner 54 provide a sharp corner between the trailing edge surface 28 and the pressure surface 38 and the suction surface 40 respectively. The geometrical discontinuity provided by these sharp corners means that flow separation is forced which is desirable in respect of truncated airfoils during normal operation (i.e. at low angles of attack). There is an internal angle θ between the pressure surface 38 and the trailing edge surface 28 and this angle θ is greater than 90 degrees and less than 150 degrees. Similarly, there is internal angle θ between the suction surface 40 and the trailing edge surface 28 and this angle θ is greater than 90 degrees and less than 150 degrees.

The pressure surface aft corner 52 and the suction surface aft corner 54 have a sharp corner rather than a rounded corner. By sharp corner is meant there is a discontinuity between the pressure/suction surfaces and the trailing edge surface. Expressed another way, the pressure surface 38 has a tangent 38a that does not coincide with a tangent 28a of the trailing edge surface 28. Similarly, the suction surface has a tangent that does not coincide with a tangent of the trailing edge surface. By "tangent" is meant the straight line that touches the pressure/suction surface or trailing edge surface and is a straight line approximation to the pressure/suction surface or trailing edge surface at the corner. The use of the sharp corners is preferred - this is because during normal operation of the wind turbine (when the angle attack is low and below a stall angle) rounded corners would lead to lower pressures behind the airfoil and hence a larger drag penalty.

Figure 6b shows how the trailing edge surface 28 can be made of three segments. A first curved segment 28a that connects to the pressure surface 38, a second curved segment 28b that connects to the suction surface 40, and a flat segment 28c that connects the first and second curved segments together. From this it can be seen that the trailing edge surface 28 is still curved even though it may incorporate some flat areas.

Referring back to Figures 5a to 5c, as can be seen, the trailing edge surface 28 comprises a plurality of channels 49 which extend between the pressure surface 38 and the suction surface 40 and are formed in the trailing edge surface 28. In particular, the channels 49 are open channels in the form of flutes 50 extending between the pressure surface 38 and the suction surface 40. In other words, the trailing edge 26 is fluted. The flutes are formed as grooves in the trailing edge surface 28 and extend substantially in the thickness direction between the pressure surface 38 and the suction surface 40.

In Figure 5b a dashed line 26a is shown which represents the position of a conventional trailing edge. The fluted trailing edge is formed so that the flutes 50 are disposed inwards toward the leading edge 24.

The truncated trailing edge is configured so that there are a plurality of flutes 50 in the trailing edge surface 28. The flutes 50 are arranged along the spanwise direction so that the trailing edge 26 has an undulating shape. In particular, Figure 5b shows the chord line C between the leading edge 24 and the trailing edge surface 28. As can be seen, when moving along the blade in the spanwise direction, the chord length undulates; due to the wave like shape of the trailing edge 26. The flues 50 have a point 50a closest to the leading edge 24 and a point 50b furthest from the leading edge 24. Furthermore, the pressure surface aft corner 52 and the suction surface aft corner 54 extend in the spanwise direction of the blade and have an undulating shape.

The flutes 50 are created by a series of channels and it is these channels that help to reduce vortex shedding from the trailing edge as will be described below.

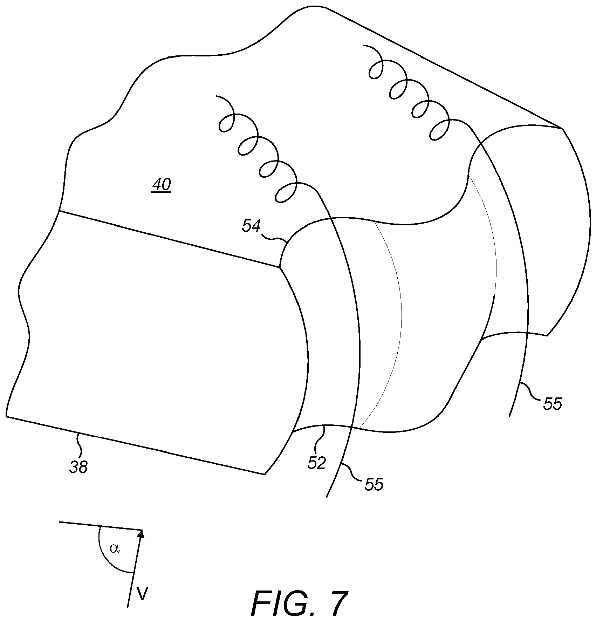

Figure 7 is a perspective view of two flutes 50 at the trailing edge. An oncoming wind flow is indicated by V and the angle of attack α is approximately 90 degrees, that is the airflow is directed at the pressure surface 38. Due to the curvature of the trailing edge surface 28 the flow around the trailing edge will tend to follow the curved trailing edge surface 28 due to the Coanda effect as it travels from the pressure side to the suction side. As the airflow is turned about the trailing edge surface 28 the airflow is less likely to separate at the pressure surface aft corner 52 than as would happen in a conventional blade as shown in Figure 4b; instead the airflow will tend to flow along the trailing edge surface 28 which reduces the size of a separation wake above the suction surface 40. Streamlines 55 are shown schematically in Figure 7 and it can be seen how they flow around the curved trailing edge surface 28 before separating from the blade at the suction side aft edge 54 where vortices are formed.

The incorporation of the flutes 50 into the rounded trailing edge surface 28 in effect creates channels in the trailing edge surface. The fluting protects and guides the air as it flows around the trailing edge surface 28 so that the air does not lose energy and separate from the trailing edge surface 28. In particular, the use of the channels guide and accelerate the airflow around the trailing edge surface 28 into small, numerous, less coherent flow structures that will interact with a separated flow region above the suction surface 40. This results in the energy in the flow dissipating more effectively and higher frequency/lower amplitudes of unsteady loading on the blade due to the separated flow structures.

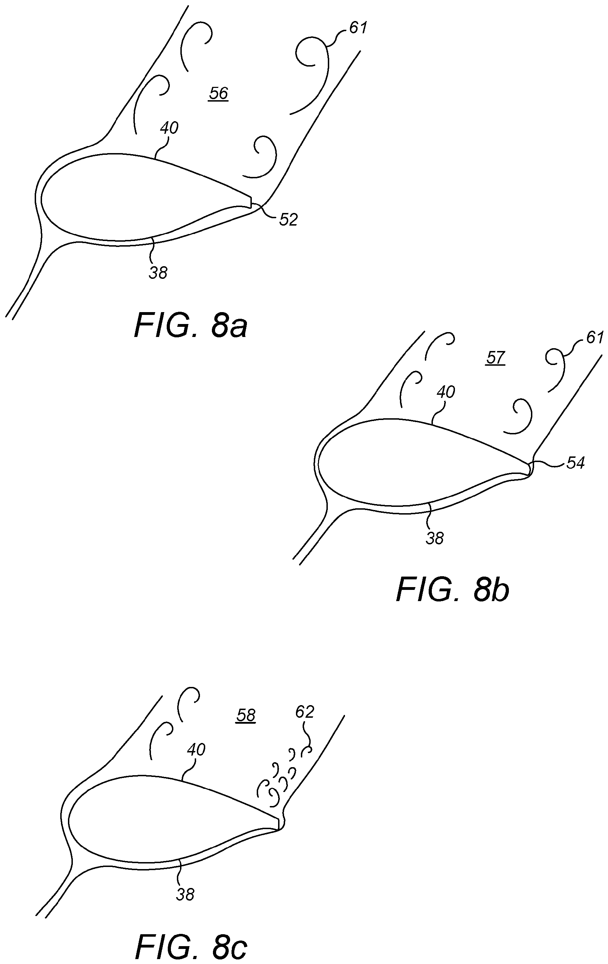

Figures 8a to 8c show schematically the effect of the invention. In Figure 8a a conventional blade is shown with a non-rounded truncated trailing edge. At high angles of attack the flow will separate from the pressure side aft edge 52 and a large wake 56 will be present in the lee of the suction surface 40. In Figure 8b, a blade with a rounded truncated trailing edge is shown (without the channels 49). As can be seen, at high angles of attack the airflow will tend to follow the shape of the flatback trailing edge surface 28 such that the airflow separates from the suction side aft edge 54 which results in a smaller wake region 56, compared to the non-rounded truncated trailing edge of Figure 8a. In both Figures 8a and 8b large scale vortices 61 are formed in the separation regions 56, 57 when the airflow separates at the trailing edge.

In Figure 8c is shown a rounded trailing edge surface with the incorporation of the channels 49 and shows a wake region 58. The channels 49 reduce the shed vortex strength breaking it into to smaller vortices 62 which mix and dissipate energy reducing the amplitude of the aerodynamic loads on the blade. The frequency of the vortex shedding will be increased by the provision of the channels 49; and so with the reduction in aerodynamic loads and the increase in frequency of the vortex shedding, the risk of vortex induced vibrations is reduced. The reduction in strength of the vortices will therefore reduce the risk of the blade experiencing edgewise vibrations at high angles of attack.

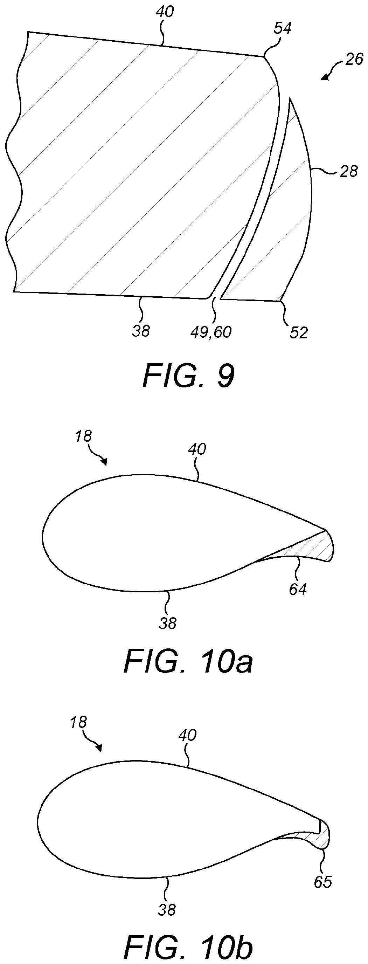

Figure 9 shows another example with the trailing edge surface 28 comprising internal channels 49 in the form of ducts 60 rather that the external flutes 50. The ducts 60 are internal to the airfoil profile and air can enter (for example at the pressure side) and then be ejected at the other end of the duct (i.e. at the suction side). The duct 60 will eject the air as a jet and in turn it will entrain any air flowing around the outside of the trailing edge surface 28 at high angles of attack. This will result in a smaller wake and a reduction in the shed vortex strength as described above with reference to the flutes 50. The ducts 60 will be spaced along the trailing edge in the spanwise direction. In another example, the trailing edge surface 26 can comprise both the external flutes 50 and the internal ducts 60 for increased performance in reducing the strength of the vortex shedding.

The ducts 60 are in the vicinity of the truncated trailing edge 26. By "vicinity" means that they are within 10% chord of the trailing edge surface 28.

The trailing edge surface 28 may be realised through a component that is retrofitted to an existing blade. Figure 10a shows a blade 18 which has a pointed trailing edge. A trailing edge add-on component 64 is connected to the blade to provide the trailing edge surface. In Figure 10b, an existing blade with a flatback trailing edge is modified by attaching trailing edge add-on component 65. The trailing edge components 64, 65 may a non-structural element made from lightweight foam for example attached to the blade 18 on the pressure surface 38 by adhesive. The use of trailing edge components 64, 65 means that the flutes 50 or ducts 60 can be made on a small scale component that is easier to fabricate than on a full size blade.

In addition, if an existing blade does not have optimal aerodynamic properties, the incorporation of the trailing edge components 64, 65 can be used to alter the thickness and camber of the airfoil to improve the aerodynamic lift and drag properties of the blade.

As has been described above the trailing edge surface 28 is provided in the transition portion 30. However, the trailing edge surface 28 could also be provided in the outer portion 32 of the blade, or in both the transition portion and the outer portion. The flutes 50 described above have been shown as having a round semi-circular shape. However, other shapes could be used such a V-shaped grooves, or a square wave shape. The trailing edge surface 28 has a thickness between the pressure surface 38 and the suction surface 40. This thickness can be expressed as a percentage of the chord of the blade and it may, for example, be between 4% and 15% chord.

## Claims

1. A wind turbine blade (18) extending in a spanwise direction from a root end (20) to a tip end (22), the blade having a pressure surface (38) and a suction surface (40), the blade comprising:
a truncated trailing edge having a trailing edge surface (28) between the pressure surface (38) and the suction surface (40);
a pressure surface aft corner (52) where the trailing edge surface connects with the pressure surface;
a suction surface aft corner (54) where the trailing edge surface connects with the suction surface;
**characterised in that** the trailing edge surface (28) is curved in cross-section, the curvature being in a cross-sectional plane parallel to a chord of the blade;
and that the truncated trailing edge comprises a plurality of channels (49), the plurality of channels comprising a plurality of flutes (50) on the trailing edge surface (28) extending between the pressure surface (38) and the suction surface (40).

2. A wind turbine blade according to claim 1, wherein the pressure surface aft corner (52) comprises a sharp corner.

3. A wind turbine blade according to claim 1 or claim 2, wherein the suction surface aft corner (54) comprises a sharp corner.

4. A wind turbine blade according to any one of the preceding claims, wherein the trailing edge surface (28) is convex in cross section.

5. A wind turbine blade according to claim 1, wherein the plurality of flutes (50) extend substantially parallel to a thickness direction between the pressure surface (38) and the suction surface (40).

6. A wind turbine blade according to any one of the preceding claims, wherein a chord length is defined between a leading edge (24) and the trailing edge surface (28), and the chord length undulates in the spanwise direction.

7. A wind turbine blade according to any one of the preceding claims, wherein the pressure surface aft corner (52) and the suction surface aft corner (54) have an undulating profile in the spanwise direction.

8. A wind turbine blade according to any one of the preceding claims, wherein the plurality of channels (49) further comprise a plurality of internal ducts (60) in the vicinity of the truncated trailing edge;
the ducts (60) extending from the pressure surface (38) to the suction surface (40) in the vicinity of the truncated trailing edge; or
the ducts extending from one of the pressure surface or the suction surface to the trailing edge surface.

9. A wind turbine blade according to anyone of the preceding claims, wherein the blade comprises:
a main blade portion having a leading edge (24) and the pressure surface (38) and the suction surface (40);
and a separate trailing edge add-on component (64), the trailing edge add-on component comprising the trailing edge surface and the plurality of channels (49); wherein
the trailing edge add-on component is connected to the main blade portion.

10. A wind turbine (10) having a wind turbine blade (18) according to any one of the preceding claims.

## Patentansprüche

1. Windkraftanlagenblatt (18), das sich in einer Spannweitenrichtung von einem Wurzelende (20) zu einem Spitzenende (22) erstreckt, wobei das Blatt eine Druckfläche (38) und eine windabgewandte Fläche (40) aufweist, wobei das Blatt umfasst:
eine verkürzte Blatthinterkante, die eine Blatthinterkantenfläche (28) zwischen der Druckfläche (38) und der windabgewandten Fläche (40) aufweist;
eine heckwärtige Ecke (52) der Druckfläche, an der die Blatthinterkantenfläche mit der Druckfläche verbunden ist;
eine heckwärtige Ecke (54) der windabgewandten Fläche, wobei die Blatthinterkantenfläche mit der windabgewandten Fläche verbunden ist;
**dadurch gekennzeichnet, dass** die Blatthinterkantenfläche (28) im Querschnitt gekrümmt ist, wobei die Krümmung in einer Querschnittsebene parallel zu einer Sehne des Blattes liegt;
und dass die verkürzte Blatthinterkante eine Vielzahl von Kanälen (49) umfasst, wobei die Vielzahl von Kanälen eine Vielzahl von Rillen (50) auf der Blatthinterkantenfläche (28) umfasst, die sich zwischen der Druckfläche (38) und der windabgewandten Fläche (40) erstrecken.

2. Windkraftanlagenblatt nach Anspruch 1, wobei die heckwärtige Ecke (52) der Druckfläche eine scharfe Ecke umfasst.

3. Windkraftanlagenblatt nach Anspruch 1 oder Anspruch 2, wobei die heckwärtige Ecke (54) der windabgewandten Fläche eine scharfe Ecke umfasst.

4. Windkraftanlagenblatt nach einem der vorstehenden Ansprüche, wobei die Blatthinterkantenfläche (28) im Querschnitt konvex ist.

5. Windkraftanlagenblatt nach Anspruch 1, wobei sich die Vielzahl von Rillen (50) im Wesentlichen parallel zu einer Dickenrichtung zwischen der Druckfläche (38) und der windabgewandten Fläche (40) erstreckt.

6. Windkraftanlagenblatt nach einem der vorstehenden Ansprüche, wobei eine Sehnenlänge zwischen einer Blattvorderkante (24) und der Blatthinterkantenfläche (28) definiert ist, und die Sehnenlänge in Spannweitenrichtung wellenförmig verläuft.

7. Windkraftanlagenblatt nach einem der vorstehenden Ansprüche, wobei die heckwärtige Ecke (52) der Druckfläche und die heckwärtige Ecke (54) der windabgewandten Fläche ein welliges Profil in Spannweitenrichtung aufweisen.

8. Windkraftanlagenblatt nach einem der vorstehenden Ansprüche, wobei die Vielzahl von Kanälen (49) weiter eine Vielzahl von internen Leitungen (60) in der Nähe der verkürzten Blatthinterkante umfasst;
wobei sich die Leitungen (60) von der Druckfläche (38) zur windabgewandten Fläche (40) in der Nähe der verkürzten Blatthinterkante erstrecken; oder
wobei sich die Leitungen von einer der Druckflächen oder der windabgewandten Fläche zur Blatthinterkantenfläche erstrecken.

9. Windkraftanlagenblatt nach einem der vorstehenden Ansprüche, wobei das Blatt umfasst:
einen Hauptblattabschnitt, der eine Blattvorderkante (24) und die Druckfläche (38) und die windabgewandte Fläche (40) aufweist;
und eine separate Blatthinterkanten-Zusatzkomponente (64), wobei die Blatthinterkanten-Zusatzkomponente die Blatthinterkantenfläche und die Vielzahl von Kanälen (49) umfasst; wobei
die Blatthinterkanten-Zusatzkomponente mit dem Hauptblattabschnitt verbunden ist.

10. Windkraftanlage (10) mit einem Windkraftanlagenblatt (18) nach einem der vorstehenden Ansprüche.

## Revendications

1. Pale d'éolienne (18) s'étendant dans le sens de l'envergure d'une extrémité de pied (20) à une extrémité de pale (22), la pale présentant une surface de pression (38) et une surface d'aspiration (40), la pale comprenant :
un bord de fuite tronqué présentant une surface de bord de fuite (28) entre la surface de pression (38) et la surface d'aspiration (40) ;
un coin arrière de surface de pression (52) où la surface de bord de fuite rejoint la surface de pression ;
un coin arrière de surface d'aspiration (54) où la surface de bord de fuite rejoint la surface d'aspiration ;
**caractérisée en ce que** la surface de bord de fuite (28) est incurvée en coupe transversale, la courbure étant dans un plan transversal parallèle à une corde de la pale ;
et **en ce que** le bord de fuite tronqué comprend une pluralité de canaux (49), la pluralité de canaux comprenant une pluralité de cannelures (50) sur la surface de bord de fuite (28) s'étendant entre la surface de pression (38) et la surface d'aspiration (40).

2. Pale d'éolienne selon la revendication 1, dans laquelle le coin arrière de surface de pression (52) comprend un coin pointu.

3. Pale d'éolienne selon la revendication 1 ou la revendication 2, dans laquelle le coin arrière de surface d'aspiration (54) comprend un coin pointu.

4. Pale d'éolienne selon l'une quelconque des revendications précédentes, dans laquelle la surface de bord de fuite (28) est convexe en coupe transversale.

5. Pale d'éolienne selon la revendication 1, dans laquelle la pluralité de cannelures (50) s'étendent sensiblement parallèlement à un sens de l'épaisseur entre la surface de pression (38) et la surface d'aspiration (40).

6. Pale d'éolienne selon l'une quelconque des revendications précédentes, dans laquelle une longueur de corde est définie entre un bord d'attaque (24) et la surface de bord de fuite (28), et la longueur de corde ondule dans le sens de l'envergure.

7. Pale d'éolienne selon l'une quelconque des revendications précédentes, dans laquelle le coin arrière de surface de pression (52) et le coin arrière de surface d'aspiration (54) présentent un profil d'ondulation dans le sens de l'envergure.

8. Pale d'éolienne selon l'une quelconque des revendications précédentes, dans laquelle la pluralité de canaux (49) comprennent en outre une pluralité de conduits internes (60) à proximité du bord de fuite tronqué ;
les conduits (60) s'étendant de la surface de pression (38) à la surface d'aspiration (40) à proximité du bord de fuite tronqué ; ou
les conduits s'étendant de l'une parmi la surface de pression ou la surface d'aspiration à la surface de bord de fuite.

9. Pale d'éolienne selon l'une quelconque des revendications précédentes, dans laquelle la pale comprend :
une partie de pale principale présentant un bord d'attaque (24) et la surface de pression (38) et la surface d'aspiration (40) ;
et un composant additionnel de bord de fuite séparé (64), le composant additionnel de bord de fuite comprenant la surface de bord de fuite et la pluralité de canaux (49) ; dans laquelle
le composant additionnel de bord de fuite est relié à la partie de pale principale.

10. Éolienne (10) présentant une pale d'éolienne (18) selon l'une quelconque des revendications précédentes.
